(19) Europäisches Patentamt
European Patent Office
Office européen des brevets

(11) **EP 2 782 881 B1**

(12) **EUROPÄISCHE PATENTSCHRIFT**

(45) Veröffentlichungstag und Bekanntmachung des Hinweises auf die Patenterteilung:
**11.03.2020  Patentblatt 2020/11**

(21) Anmeldenummer: **12790879.6**

(22) Anmeldetag: **21.11.2012**

(51) Int Cl.:
*C03C 3/068* $^{(2006.01)}$        *C03C 4/16* $^{(2006.01)}$
*C03C 10/00* $^{(2006.01)}$      *H01B 3/08* $^{(2006.01)}$

(86) Internationale Anmeldenummer:
**PCT/EP2012/073174**

(87) Internationale Veröffentlichungsnummer:
**WO 2013/076114 (30.05.2013 Gazette 2013/22)**

(54) **GLASKERAMIK ALS DIELEKTRIKUM IM HOCHFREQUENZBEREICH**

GLASS-CERAMIC AS DIELECTRIC IN THE HIGH-FREQUENCY RANGE

VITROCÉRAMIQUE SERVANT DE DIÉLECTRIQUE DANS LA GAMME DES HAUTES FRÉQUENCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2011  DE 102011119804**

(43) Veröffentlichungstag der Anmeldung:
**01.10.2014  Patentblatt 2014/40**

(73) Patentinhaber: **SCHOTT AG
55122 Mainz (DE)**

(72) Erfinder:
• **BRAUN, Hubertus
55576 Sprendlingen (DE)**
• **LETZ, Martin
55128 Mainz (DE)**
• **RUEDINGER, Bernd
55286 Woerrstadt (DE)**
• **SEILER, Daniela
55232 Alzey (DE)**

(74) Vertreter: **Witte, Weller & Partner Patentanwälte mbB
Postfach 10 54 62
70047 Stuttgart (DE)**

(56) Entgegenhaltungen:
**WO-A2-99/21803          CN-C- 1 113 822
DE-A1-102010 032 982    JP-A- 2011 195 440
US-A1- 2005 268 656**

**Beschreibung**

Die Erfindung betrifft eine Glaskeramik, die als Dielektrikum im Hochfrequenzbereich (Frequenz > 200 Mhz), insbesondere im Gigahertzbereich (Frequenz f > 1 GHz) anwendbar ist.

Für eine Reihe von Anwendungen im Hochfrequenzbereich sind spezielle Werkstoffe erforderlich, die eine möglichst hohe relative Permittivität $\varepsilon$ bei einem möglichst geringen dielektrischen Verlust (tan $\delta$) aufweisen. Um Verstimmungen im Nahbereich durch den Körper eines Benutzers (sog. "Body Loading") zu vermeiden, ist eine dielektrische Aufladung bei Antennen, Filtern und anderen Einrichtungen von besonderer Bedeutung. Hierzu sind Dielektrika erforderlich, die eine hohe relative Permittivität aufweisen, mit $\varepsilon \geq 15$, sowie einen geringen dielektrischen Verlust (tan $\delta$) von höchstens $10^{-2}$ vorzugsweise geringer, im Hochfrequenzbereich. Ferner soll die Temperaturabhängigkeit der Resonanzfrequenz $\tau_f$ möglichst gering sein. Schließlich soll sich ein derartiges Material auf möglichst einfache und kostengünstige Weise verarbeiten lassen, um endformnahe Konturen (Near-Net-Shape) kostengünstig zu ermöglichen.

Im Stand der Technik sind eine Reihe von keramischen Materialien bekannt, die durch Sinterprozesse verarbeitet werden. Ein erstes Glaskeramiksystem, das über eine Glasschmelze gewonnen wurde, ist ein $BiNbO_4$-System, das aus Mirsaneh et al., "Circularly Loaded Dielectric-Loaded Antennas: Current Technology and Future Challanges", Adv. Funct. Materials 18, (2008), S. 1-8 zur Anwendung bei dielektrisch geladenen Antennen für den Gigahertzbereich offenbart ist. Dieses Material wird zur Herstellung der beiden hauptsächlich genutzten Formen von Antennen, der zirkular polarisierten DLA-Helixantenne (D-LQH-Antenne) und der quadratischen Patch-Antenne, genutzt. Hierzu wird zunächst ein Glas der Zusammensetzung von 30 Mol% $Bi_2O_3$, 30 Mol% $Nb_2O_3$, 30 Mol% $B_2O_3$ und 10 Mol% $SiO_2$ in herkömmlicher Weise bei 1250°C zwei Stunden lang erschmolzen.

Dieses Glas wurde in zylindrische Formen gegossen, bei 500 bis 520°C entspannt und langsam auf Raumtemperatur abgekühlt. Anschließend erfolgte eine Kristallisierung bei verschiedenen Temperaturen zwischen 600°C und 1000°C. Als optimaler Wert für Antennenanwendungen wird bei einer Wärmebehandlung bei 960°C eine relative Permittivität $\varepsilon$ von 15 angegeben mit einem Gütefaktor $Q \cdot f_0$ von 15.000 GHz und einem Temperaturkoeffizienten der Resonanzfrequenz $\tau_f$ von -80 $MK^{-1}$. Als kristalline Phase wurde hierbei im Wesentlichen orthorhombisches $BiNbO_4$ charakterisiert.

Dieses System unter Verwendung von Wismut und Niob ist im Hinblick auf die Rohmaterialien sehr teuer.

Daneben gibt es eine Reihe von gesinterten Keramikmaterialien (vgl. US 6,184,845 B1, US 2007/063902 A1). Darin wird als dielektrisches Material für den Keramikkern einer dielektrisch geladenen D-LQH-Antenne ein gesintertes Keramikmaterial auf der Basis von Zirkon-Titanat bzw. auf der Basis von Zirkon-Zinn-Titanat mit einer relativen Permittivität von etwa 36 angegeben. Das Material soll durch Extrudieren oder Pressen und anschließendes Sintern hergestellt werden.

Weitere gesinterte Materialien sind in der Übersicht von M.T. Sebastian et al., "Low loss dielectric materials for LTCC applications", International Materials Reviews, Vol. 53, 2008, S. 57-90 angegeben. Auch wenn diese Materialien teilweise als "Glaskeramiken" bezeichnet sind, so handelt es sich hierbei doch um gesinterte Materialien, da sie durch das Sintern einer Mischung von glasigen und kristallinen Pulvern hergestellt werden.

Aus der US 2002/0037804 A1 und der US 2004/0009863 A1 sind ferner dielektrische Keramiken bekannt, die diverse Kristallphasen, wie etwa $CaTiO_3$, $SrTiO_3$, $Ba\,Ti_4O_9$, $La_2Ti_2O_7$, $Nd_2Ti_2O$, $Ba_2Ti_9O_{20}$, $Mg_2TiO_4$, $Mg_2SiO_4$, $Zn_2TiO_4$ usw. bilden sollen, die für hohe Gütefaktoren verantwortlich sein sollen. Auch hierbei handelt es sich um gesinterte Keramiken.

Durch Sintern hergestellte Dielektrika weisen eine Reihe von Nachteilen auf: So ist jeder Sinterprozess immer mit einer gewissen Schrumpfung verbunden, was zur Geometrieungenauigkeiten und entsprechender Nachbearbeitung führt. Ferner ergibt sich bei jedem Sinterprozess eine gewisse Restporosität, die nachteilig bei einer Metallisierung der Oberfläche ist. Das Metall dringt in die Poren ein und erhöht den dielektrischen Verlust des Dielektrikums.

Außerdem ist die Herstellung gesinterter Materialien grundsätzlich relativ aufwändig und teuer.

Aus der JP 2006124201 A ist ferner ein bleifreies Glas bekannt, das zur Herstellung eines Dielektrikums für eine gedruckte Schaltung mit einer hohen Dielektrizitätskonstante und einem kleinen elektrischen Verlust verwendet werden soll. Das Glas enthält (in Mol-%): 25 bis 45 $SiO_2$, 5 bis 25 BaO, 18 bis 35 $TiO_2$, 1 bis 10 $Al_2O_3$, 0 bis 15 $B_2O_3$, 0 bis 15 MgO+CaO+SrO, 0 bis 7 WO+$ZrO_2$, mit ZnO < 1. Es soll beim Tempern $BaTi_4O_9$ auskristallisieren.

Aus der JP2011-195440 A, die inhaltlich der deutschen Patentanmeldung DE 10 2010 012 524.5 entspricht, ist ferner eine Glaskeramik bekannt mit den folgenden Bestandteilen (in Mol-% auf Oxidbasis):

| | |
|---|---|
| $SiO_2$ | 5 - 50 |
| $Al_2O_3$ | 0 - 20 |
| $B_2O_3$ | 0 - 25 |
| BaO | 0 - 25 |
| $TiO_2$ | 10 - 60 |

(fortgesetzt)

| | |
|---|---|
| RE$_2$O$_3$ | 5 - 35 |

wobei Ba teilweise durch Sr, Ca, Mg ersetzt sein kann, wobei RE Lanthan, ein anderes Lanthanoid oder Yttrium ist, und wobei Ti teilweise durch Zr, Hf, Y, Nb, V, Ta ersetzt sein kann.

Mit dieser Glaskeramik lassen sich qualitativ hochwertige Dielektrika herstellen, die insbesondere für Hochfrequenzanwendungen, wie Antennen, geeignet sind. Als nachteilig hat sich hierbei jedoch gezeigt, dass auch diese Glaskeramik nicht zur Herstellung von Antennen optimiert ist, was eine nachfolgende Metallisierung der Oberfläche erfordert. Hierfür ist die Restporosität noch relativ hoch. Außerdem ist diese Glaskeramik nicht im Hinblick auf eine möglichst geringe Temperaturabhängigkeit der Resonanzfrequenz optimiert, was für Antennenanwendungen ein wichtiges Kriterium darstellt.

Aus der CN 1 113 882 C ist ferner ein dielektrisches Material für Hochfrequenzanwendungen bekannt, das eine Glaskeramik des Systems MgO-Al$_2$O$_3$-SiO$_2$-CeO$_2$-TiO$_2$ ist, mit 2 bis 8 Gew.-% MgO, 10 bis 19 Gew.-% Al$_2$O$_3$, 20 bis 31 Gew.-% SiO$_2$, 10 bis 18 Gew.-% CeO$_2$, 30 bis 50 Gew.% TiO$_2$. Der dielektrische Verlust bei 1 GHz soll höchstens $9 \cdot 10^{-4}$ betragen.

Vor diesem Hintergrund liegt der Erfindung die Aufgabe zugrunde, einen verbesserten Werkstoff anzugeben, der als Dielektrikum für hochfrequente Anwendungen einsetzbar ist, eine hohe relative Permittivität und einen geringen dielektrischen Verlust aufweist. Ferner soll der Werkstoff auf möglichst einfache und kostengünstige Weise herstellbar und verarbeitbar sein. Insbesondere soll der Werkstoff für die Herstellung von Antennen besonders geeignet sein.

Diese Aufgabe wird durch eine Glaskeramik gelöst, die mindestens die folgenden Bestandteile (in Mol-% auf Oxidbasis) aufweist:

| | |
|---|---|
| SiO$_2$ | 1 - 50 |
| Al$_2$O$_3$ | 0 - 20 |
| B$_2$O$_3$ | 0 - 25 |
| TiO$_2$ | >41 - 70 |
| RE$_2$O$_3$ | 15 - 30 |
| BaO | 0 - 35 |

wobei RE Lanthan, ein anderes Lanthanoid oder Yttrium ist, und wobei Ti teilweise, vorzugsweise bis zu 10 % durch Zr, Hf, Y, Nb, V, Ta ersetzt sein kann, wobei ein obligatorischer Mindestgehalt von größer als 41 Mol.-% TiO$_2$ nicht unterschritten werden darf, und wobei die Porosität < 0,01 % ist, und wobei 15 bis 30 Mol-% La$_2$O$_3$ und/oder Nd$_2$O$_3$ enthalten sind.

Es hat sich gezeigt, dass sich mit einer derartigen Glaskeramik besonders hochwertige Antennen herstellen lassen, da infolge der sehr geringen Porosität bei der Metallisierung besonders geringe Verluste auftreten. Mit den schmelztechnologisch hergestellten Glaskeramiken ergeben sich sehr geringe Porositäten, die < 0,01 % sind.

In bevorzugter Weiterbildung der Erfindung ist der Anteil an B$_2$O$_3$ < 9 Mol-%.

Bei höherer Konzentration von B$_2$O$_3$ bildet sich die Kristallphase LaBO$_3$. Wegen der sehr geringen Dielektrizitätskonstante $\varepsilon$ von nur 12,5 führt dies zu einer Absenkung der gesamten Dielektrizitätskonstante und zu einem erhöhten Auftreten von Streuung, was effektiv die Güte des Materials herabsetzt.

In weiter bevorzugter Ausgestaltung der Erfindung enthält die Glaskeramik 0,01 bis zu 3 Mol-% mindestens eines Läutermittels enthält, das vorzugsweise aus der Gruppe ausgewählt ist, die aus As$_2$O$_3$ und Sb$_2$O$_3$ besteht.

Es hat sich gezeigt, dass bereits sehr geringe Konzentrationen insbesondere von Sb$_2$O$_3$ die Qualität der Glaskeramik positiv beeinflussen.

Die Glaskeramik weist bevorzugt einen dielektrischen Verlust (tan $\delta$) von höchstens $10^{-2}$, vorzugsweise von höchstens $10^{-3}$, im Hochfrequenzbereich (Frequenz f > 200 MHz) auf.

Die relative Permittivität $\varepsilon$ beträgt mindestens 15, vorzugsweise > 18 und liegt vorzugsweise im Bereich von 20 bis 80.

Ferner lässt sich eine sehr geringe Temperaturabhängigkeit der Resonanzfrequenz erzielen. Insbesondere bei optimierten Keramisierungsbedingungen kann der Betrag der Temperaturabhängigkeit der Resonanzfrequenz $|\tau_f|$ auf höchstens 200 ppm/K, vorzugsweise höchstens 50 ppm/K, besonders bevorzugt auf höchstens 10 ppm/K begrenzt werden.

Die erfindungsgemäße Glaskeramik enthält mindestens eine Mischkristallphase auf der Basis von RE, Ti, Si, O und ggf. Ba, wobei Ba zumindest teilweise durch Sr, Ca, Mg ersetzt sein kann, wobei RE ein Lanthanoid oder Yttrium ist und wobei Ti zumindest teilweise durch Zr, Hf, Y, Nb, V, Ta ersetzt sein kann.

Die Glaskeramik enthält vorzugsweise mindestens eine Mischkristallphase, die aus der Gruppe ausgewählt ist, die durch $(BaO)_x(RE_2O_3)_y(SiO_2)_z(TiO_2)_u$, z.B. $RE_2Ti_2O_7$, $RE_2Ti_2SiO_9$ und $RE_4Ti_9O_{24}$ gebildet ist, wobei RE Lanthan, ein anderes Lanthanoid oder Yttrium ist, wobei bis zu 10 % von Ba durch Sr, Ca, Mg ersetzt sein können, und wobei bis zu 10 % Ti durch Zr, Hf, Y, Nb, V, Ta ersetzt sein können.

Der kristalline Anteil beträgt vorzugsweise mindestens 30 Vol.-%, vorzugsweise bis zu 95 Vol.-%.

Die durchschnittliche Kristallitgröße beträgt vorzugsweise 10 Nanometer bis 50 Mikrometer, vorzugsweise 100 Nanometer bis 1 Mikrometer.

Bevorzugt ist die erfindungsgemäße Glaskeramik als dielektrischer Resonator, als elektronisches Frequenzfilterelement oder Antennenelement für den Hochfrequenzbereich verwendbar.

Es kann sich hierbei etwa um ein zylindrisches Antennenelement oder ein Patch-Antennenelement handeln.

Die Aufgabe der Erfindung wird ferner durch ein Dielektrikum mit einem dielektrischen Verlust von höchstens $10^{-2}$ im Hochfrequenzbereich gelöst, das mit den folgenden Schritten hergestellt ist:

- Erschmelzen eines Ausgangsglases, das die Bestandteile (in Mol-% auf Oxidbasis) enthält

| | |
|---|---|
| $SiO_2$ | 1 - 50 |
| $Al_2O_3$ | 0 - 20 |
| $B_2O_3$ | 0 - 25 |
| $TiO_2$ | >41 - 70 |
| $RE_2O_3$ | 15 - 30 |
| BaO | 0 - 35 |

wobei RE Lanthan, ein anderes Lanthanoid oder Yttrium ist, und wobei Ti teilweise, vorzugsweise bis zu 10 % seines obligatorischen Gehalts, durch Zr, Hf, Y, Nb, V, Ta ersetzt sein kann, wobei ein obligatorischer Mindestgehalt von größer als 41 Mol.-% $TiO_2$ nicht unterschritten werden darf, und wobei 15 bis 30 Mol.-% $La_2O_3$ oder $Nd_2O_3$ enthalten sind;

- Homogenisieren derart, dass die Porosität < 0,01 % ist;
- Gießen des Ausgangsglases in eine gewünschte Form;
- Abkühlen des Ausgangsglases auf Raumtemperatur;
- Keramisieren des Ausgangsglases durch eine Wärmebehandlung.

Hierbei beträgt vorzugsweise der Betrag der Temperaturabhängigkeit der Resonanzfrequenz $|\tau_f|$ höchstens 200 ppm/K, vorzugsweise höchstens 100 ppm/K, weiter bevorzugt höchstens 60 ppm/K, weiter bevorzugt höchstens 20 ppm/K, besonders bevorzugt höchstens 10 ppm/K.

Dies wird durch eine besondere Keramisierungsbehandlung des verwendeten Ausgangsglases erreicht. Es wurde festgestellt, dass sich durch die gegensätzlichen Eigenschaften des Restglases und der Kristallanteile in der Glaskeramik bei optimierter Führung der Keramisierungsbehandlung eine Temperaturabhängigkeit der Resonanzfrequenz von nahe null einstellen lässt.

Die Keramisierung erfolgt vorzugsweise durch Erwärmung auf eine Zieltemperatur von 900 °C bis 1050 °C, insbesondere von 900 °C bis 1000 °C, insbesondere von 930 °C bis 1000 °C, insbesondere von 930 °C bis 980 °C, und nachfolgendes Halten über eine Zeitdauer von 1 bis mindestens 3 Stunden, insbesondere von 1 bis 10 Stunden insbesondere von 3 bis mindestens 5 Stunden, bis zu maximal etwa 25 Stunden, sowie anschließendes Abkühlen auf Raumtemperatur.

Das Ausgangsglas kann bei seiner Herstellung durch ein schmelztechnologisches Verfahren in eine endformnahe Form (Near-Net-Shape) gebracht werden. Es ist dann entweder gar keine Nachbehandlung oder allenfalls eine geringfügige Nachbehandlung an seiner Oberfläche etwa durch Schleifen, erforderlich.

Weitere Merkmale und Vorteile der Erfindung ergeben sich aus der nachfolgenden Beschreibung bevorzugter Ausführungsbeispiele unter Bezugnahme auf die Zeichnung. Es zeigen:

Fig. 1    eine elektronenmikroskopische Aufnahme (EDX) von einer Vergleichsprobe in Form einer $(Ca, Mg)TiO_3$- Ke-ramik, die sintertechnologisch hergestellt ist;

Fig. 2    eine elektronenmikroskopische Aufnahme (EDX) von einer Probe gemäß Beispiel 1 aus Tab. 1.

Beispiele

In Tab. 1 sind verschiedene Glaszusammensetzungen für ein Ausgangsglas im System La-Ti-Si-O zusammengestellt, teilweise mit Zusätzen von B und mit Läutermittel (Sb). Weitere Beispiele sind in Tab. 2 enthalten.

Tab. 1

| Beispiel | Zusammensetzung (Mol-%) | | | | | | | |
|---|---|---|---|---|---|---|---|---|
| | 1 | 2 | 3 | 4 | 5 | 6 | 7 | 8 |
| $SiO_2$ | 28,17 | 26,29 | 27,93 | 20,75 | 21,13 | 21,02 | 18,42 | 27,97 |
| $Al_2O_3$ | 0,00 | 0,00 | 0,00 | 0,00 | 0,00 | 6,01 | 0,00 | 13,98 |
| $B_2O_3$ | 7,05 | 6,57 | 3,96 | 7,92 | 8,07 | 12,61 | 7,03 | 0,00 |
| $TiO_2$ | 43,12 | 44,69 | 45,39 | 49,88 | 47,16 | 40,24 | 56,76 | 38,64 |
| $Sb_2O_3$ | 0,10 | 0,10 | 0,10 | 0,10 | 0,10 | 0,00 | 0,06 | 0,10 |
| $La_2O_3$ | 21,56 | 22,34 | 22,70 | 21,38 | 23,58 | 20,12 | 17,74 | 19,32 |
| f/GHz | 9,95 | 9,83 | 9,94 | 9,99 | 11,06 | 10,65 | 9,97 | 10,46 |
| Q | 41 | 39 | 43 | 50 | 124 | 179 | 89 | 89 |
| Qf/ GHz | 420 | 390 | 430 | 510 | 1450 | 2050 | 930 | 970 |
| $\varepsilon$ | 23,9 | 23,5 | 23,6 | 23,2 | 18,8 | 21,0 | 23,4 | 21,2 |
| $\tan\delta$ | 0,0239 | 0,0253 | 0,0230 | 0,0195 | 0,0076 | 0,0052 | 0,0108 | 0,0108 |

Tab. 2

| Beispiel | Zusammensetzung (Mol-%) | | | | | | | | |
|---|---|---|---|---|---|---|---|---|---|
| | 9 | 10 | 11 | 12 | 13 | 14 | 15 | 16 | 17 |
| $SiO_2$ | 21,0 | 28,17 | 22,34 | 20,77 | 20,0 | 20,0 | 19,0 | 17,5 | 17 |
| $Nd_2O_3$ | | | | | 20,0 | 22,0 | 21,5 | 21,14 | 22,45 |
| $B_2O_3$ | 12,60 | 7,05 | 6,57 | 6,66 | 6,0 | 6,0 | 7,0 | 8,0 | 6,0 |
| $TiO_2$ | 40,20 | 43,12 | 44,69 | 49,92 | 52,0 | 50,5 | 52,0 | 51,36 | 50,55 |
| $Nb_2O_5$ | | | | | 0 | 0 | 0 | 0 | 4,0 |
| $La_2O_3$ | 20,1 | 21,56 | 22,56 | 28,7 | 2 | 0 | 0 | 0 | 0 |
| $ZrO_2$ | | | | | 0 | 1,5 | 0 | 0 | 0 |
| BaO | | | | | 0 | 0 | 0 | 2 | 0 |
| $CeO_2$ | | | | | 0 | 0 | 0,5 | 0 | 0 |
| $Sb_2O_3$ | 0,1 | 0,1 | 0,1 | 0,05 | | | | | |
| f/GHz | 10,89 | 10,73 | 10,17 | 9,01 | 8,424 | 8,249 | 7,771 | 8,166 | 8,88 |
| Q | 443 | 87 | 39 | 139 | 648 | 528 | 856 | 260 | 633 |
| Qf/ GHz | 4820 | 930 | 400 | 1250 | 5459 | 4355 | 6652 | 2123 | 5621 |
| $\varepsilon$ | 18,9 | 19,7 | 22,3 | 27,6 | 23,9 | 24,9 | 28,1 | 25,6 | 21,6 |
| $\tan\delta$ | 0,0024 | 0,0116 | 0,0254 | 0,0072 | 0,0014 | 0,0018 | 0,0011 | 0,0036 | 0,0014 |

Dabei sind die Beispiele 6, 8, 9 nicht von der Erfindung umfasst.

Die verschiedenen Glasproben gemäß Beispiel 1 bis 17 werden zunächst unter Verwendung von üblichen Ausgangsmaterialien in üblicher Weise geschmolzen und homogenisiert, wobei Platintiegel, PT/RI-Tiegel, PT/RH-Tiegel, Quarztiegel oder Aluminiumoxidtiegel verwendet werden können. Die Proben werden zunächst 2 Stunden bei 1350 °C erschmolzen, dann 30 Minuten bei 1400 °C geläutert, 20 Minuten mit einem Platinrührer gerührt und homogenisiert, 10 Minuten stehen gelassen und dann in geeignete Formen etwa aus Stahl, Graphit, Aluminiumoxid oder Quarzglas abgegossen und damit in eine endkonturnahe Form gebracht.

Nach Abkühlung auf Raumtemperatur wird das Glas einem Keramisierungsschritt unterzogen, was vorzugsweise durch ein Infrarotheizverfahren erfolgt.

Ein typischer Keramisierungszyklus mit Hilfe von einem Infrarot-Heizofens lautet wie folgt:

- Aufheizen mit 300 K/min auf 1050°C;
- Halten bei 1050°C für 7 Sekunden;
- Aufheizen auf 1200°C mit einer Heizrate von 50 K/min;
- Halten bei 1200°C 15 Minuten lang;
- Abkühlen auf etwa 500°C durch Abschalten des Ofens mit einer Abkühlgeschwindigkeit von ca. 50 K/min;
- Entnahme der Probe aus dem Ofen, wenn eine Temperatur von etwa 500°C erreicht ist.

Alternativ könnte ein Keramisierungszyklus in einem konventionellen Ofen durch Tempern bei 925 °C über 15 Stunden durchgeführt werden. Hierzu wurden eine Reihe von Keramisierungszyklen systematisch untersucht. Die Ergebnisse sind in Tab. 3 zusammengefasst.

Als Ausgangsglas wurde hierbei ein Glas folgender Zusammensetzung (in Mol-% auf Oxidbasis) verwendet (Beispiel 18, nicht von der Erfindung umfasst):

| | |
|---|---|
| $SiO_2$ | 21,0 |
| $Al_2O_3$ | 6,0 |
| $B_2O_3$ | 12,6 |
| $TiO_2$ | 40,2 |
| $La_2O_3$ | 20,1 |
| $Sb_2O_3$ | 0,1. |

Tab. 3

| Probe | $T_K$[°C] | $t_H$[h] | GPA | La$_4$ | La$_2$ | $TiO_2$ | $f_{res}$ | $\varepsilon_r$ | Qf | $\tan(\delta)$ | $\tau_f$ |
|---|---|---|---|---|---|---|---|---|---|---|---|
| 10 | Glas | - | 100 | 0 | 0 | 0 | 11.31 | 17.5 | 1850 | 6.06 | -82.8 |
| 11 | 880 | 5 | 97.0 | 2.7 | 0.3 | 0 | 11.52 | 17.6 | 2220 | 5.18 | -51.3 |
| 12 | 890 | 5 | 90.4 | 7.9 | 1.7 | 0 | 11.24 | 17.8 | 3600 | 3.12 | -18.8 |
| 13 | 895 | 5 | 85.6 | 12.3 | 2.1 | 0 | 11.47 | 17.6 | 2470 | 4.64 | |
| 14 | 900 | 5 | 70.3 | 26.0 | 3.7 | 0 | 11.38 | 18.0 | 3780 | 3.01 | -13.3 |
| 15 | 905 | 5 | 80.4 | 17.2 | 2.4 | 0 | 11.36 | 18.0 | 3940 | 2.88 | |
| 16 | 910 | 1. | 88.8 | 9.3 | 1.9 | 0 | 11.37 | 18.1 | 3220 | 3.53 | |
| 17 | 910 | 3 | 79.4 | 17.0 | 3.6 | 0 | 11.34 | 18.1 | 3200 | 3.54 | |
| 18 | 910 | 5 | 67.6 | 26.3 | 6.1 | 0 | 11.41 | 18.0 | 4800 | 2.38 | -9.5 |
| 19 | 930 | 5 | 74.4 | 18.2 | 6.9 | 0.5 | 11.12 | 18.9 | 4640 | 2.40 | -3.0 |
| 20 | 950 | 5 | 71.2 | 15.7 | 11.2 | 1.9 | 10.89 | 18.9 | 4820 | 2.26 | +7.6 |
| 21 | 1000 | 5 | 62.0 | 0 | 33.6 | 4.4 | 10.46 | 21.3 | 4400 | 2.38 | +57.7 |
| 22 | 1050 | 5 | 67.8 | 0 | 28.4 | 3.8 | 10.40 | 21.5 | 4670 | 2.39 | |
| 23 | 1100 | 5 | 66.0 | 0 | 29.6 | 4.4 | 9.98 | 22.5 | 4600 | 2.17 | +51.1 |

In Tab. 3 sind die Ergebnisse der Keramisierungsreihe im herkömmlichen Ofen zusammengefasst, mit $T_K$ Keramisierungstemperatur [°C], mit der Keramisierungsdauer $t_H$ [Stunden], mit GPA (Glasphasenanteil nach Röntgenbeugung, Rietveld Analyse), mit dem absoluten Phasenanteil in Gew.-% und den Daten für die Messfrequenz $f_{res}$ [GHz], die Dielektrizitätskonstante $\varepsilon_r$, dem Gütefaktor $Q_f$ [GHz], $\tan \delta$ [10$^{-3}$] und $\tau_f$ [ppm/K] nach Hakki-Coleman.

Es zeigt sich, dass durch eine Optimierung der Keramisierungsparameter der Gütefaktor deutlich gesteigert werden kann bei gleichzeitig geringen $\tan \delta$ und einem absolut geringen $\tau_f$ in der Nähe von 0.

Sofern notwendig, können die Formkörper nach dem Gießen noch durch eine Schleif- oder Polierbehandlung nachgearbeitet werden bzw. im Falle der Herstellung von zylindrischen Formkörpern durch spitzenloses Außenrundschleifen bearbeitet werden.

Der Volumenanteil der kristallinen Phase bei den Beispielen 1 bis 7 gemäß Tab. 1 liegt in der Größenordnung von etwa 50 bis 70 Vol.-%.

An den Proben 1 bis 7 wurden relative Permittivitäten $\varepsilon$ gemessen, die sämtlich größer 15 waren und im Bereich von 20 bis 50 lagen.

Die Proben zeichnen sich ferner durch einen geringen dielektrischen Verlust bzw. durch eine hohe Güte aus.

Als Güte Q bezeichnet man den Kehrwert des dielektrischen Verlustes ($\tan \delta$):

$$Q = 1/\tan(\delta).$$

Die Güte wird nach der Resonanzmethode nach Hakki-Coleman gemessen. Hierbei wird der Gütefaktor als Produkt aus Güte Q und Messfrequenz $f_0$ ermittelt.

Außer Beispiel 1 wiesen alle Beispiele einen Gütefaktor $Q \cdot f_0$ im Bereich von mehr als 1000 GHz auf. Für das Beispiel 5 wurde bei 7,547 GHz eine Güte Q von 418 gemessen, also ein Gütefaktor von 3155 GHz gemessen.

Der Temperaturkoeffizient $\tau_f$ der Resonanzfrequenz ist bei sämtlichen gemessenen Proben sehr niedrig.

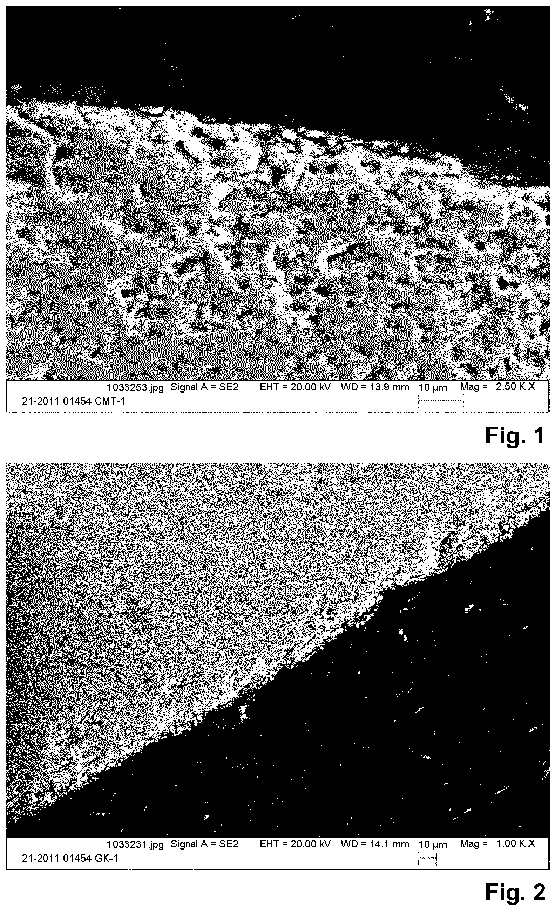

Die Fig. 1 und 2 zeigen elektronenmikroskopische Aufnahmen (EDX) einer herkömmlichen Vergleichsprobe in Form einer $(Ca, Mg)TiO_3$- Keramik, die sintertechnologisch hergestellt ist, und einer erfindungsgemäßen Probe aus einer Glaskeramik gemäß Beispiel 1 aus Tab. 1. Beide Aufnahmen wurden entlang einer Schnittkante gemacht. Während bei Fig. 1 (herkömmliche Sinterkeramik) eine Porosität deutlich erkennbar ist, ist die erfindungsgemäße Glaskeramik gemäß Fig. 2 weitgehend porenfrei. Nur an der Oberfläche sind kleine Poren erkennbar, die aus dem Polierprozess stammen. Deutlich sichtbar ist die Struktur der Kristallite vor dem dunklen Hintergrund der Restglasphase.

Bei Anwendungen als Dielektrikum für Antennen, die insbesondere als mobile GPS-Antennen für Handys geeignet sind, liegt der Frequenzbereich oberhalb von 200 MHz, insbesondere im Bereich von etwa 800 MHz bis 70 GHz. Durch die dielektrische Aufladung der Antenne wird die Sensitivität der Antenne gegen Verstimmung durch den Benutzer reduziert.

Aus Proben der Beispiele 1 bis 8 gemäß Tab. 1 wurden zylindrische Antennenelemente hergestellt, deren Oberflächen mittels eines lithographischen Verfahrens mit Kupfer in der gewünschten Struktur beschichtet wurde. Vergleichsmessungen mit herkömmlichen Antennenelementen gleicher Größe und gleichen Aufbaus aus der Sinterkeramik CMT (Calcium-Magnesium-Titanat) zeigten trotz deutlich geringerer Güte (Q = 2050 bei 10,6 GHz, mit Permittivität $\varepsilon$=21,2) im Vergleich zu Q = 56000 bei 7,0 GHz mit ähnlicher Permittivität, dass sich eine vergleichbare Effizienz (Gain) beider Antennen ergab. Die Glaskeramikantennen mit einer Zusammensetzung (gemäß Beispiel 18) hatten etwa 71% an Effizienz der CMT-Antennenelemente.

Berücksichtigt man, dass sich bei optimierten Zusammensetzungen und Keramisierungszyklen auch bei den Glaskeramiken deutlich bessere Gütewerte von 4000 und mehr erzielbar sind (vgl. Tab. 3), so zeigt sich, sich dass mit den erfindungsgemäßen Glaskeramiken vergleichbare oder bessere Antennen herstellen lassen als mit herkömmlicher Sinterkeramik (CMT).

Es wird vermutet, dass diese gute Performance auf die sehr geringe Porosität der Glaskeramik zurückzuführen ist, die nachteilige Einflüsse von Mikroporosität an der Oberfläche bei der Metallisierung wie bei der Sinterkeramik vermeidet.

## Patentansprüche

**1.** Glaskeramik, die mindestens die folgenden Bestandteile (in Mol-% auf Oxidbasis) aufweist:

| | |
|---|---|
| $SiO_2$ | 1 - 50 |
| $Al_2O_3$ | 0 - 20 |
| $B_2O_3$ | 0 - 25 |
| $TiO_2$ | > 41 - 70 |
| $RE_2O_3$ | 15 - 30 |
| BaO | 0 - 35 |

wobei RE Lanthan, ein anderes Lanthanoid oder Yttrium ist, wobei Ti teilweisedurch Zr, Hf, Y, Nb, V, Ta ersetzt sein kann, wobei ein obligatorischer Mindestgehalt von größer als 41 Mol-% nicht unterschritten werden darf, und wobei die Porosität < 0,01 % ist, und wobei 15 bis 30 Mol-% $La_2O_3$ und/oder $Nd_2O_3$ enthalten sind.

**2.** Glaskeramik nach Anspruch 1, bei der der Anteil an $B_2O_3$ < 9 Mol-%, vorzugsweise ≤8 Mol-% ist.

**3.** Glaskeramik nach einem der vorhergehenden Ansprüche, die einen dielektrischen Verlust (tan $\delta$) von höchstens $10^{-2}$, vorzugsweise von höchstens $10^{-3}$, im Hochfrequenzbereich (Frequenz f > 200 MHz) aufweist.

**4.** Glaskeramik nach einem der vorhergehenden Ansprüche, mit einer relativen Permittivität $\varepsilon$ von mindestens 15, vorzugsweise > 18, vorzugsweise im Bereich von 20 bis 80.

**5.** Glaskeramik nach einem der vorhergehenden Ansprüche, bei der der Betrag der Temperaturabhängigkeit der Resonanzfrequenz $|\tau_f|$ höchstens 200 ppm/K, vorzugsweise höchstens 50 ppm/K, besonders bevorzugt höchstens 10 ppm/K ist.

6. Glaskeramik nach einem der vorhergehenden Ansprüche, die mindestens eine Mischkristallphase auf der Basis von RE, Ti, Si, O und ggf. Ba enthält, wobei Ba zumindest teilweise durch Sr, Ca, Mg ersetzt sein kann, wobei RE ein Lanthanoid oder Yttrium ist und wobei Ti zumindest teilweise durch Zr, Hf, Y, Nb, V, Ta ersetzt sein kann.

7. Glaskeramik nach einem der vorhergehenden Ansprüche, die mindestens eine Mischkristallphase enthält, die aus der Gruppe ausgewählt ist, die durch $(BaO)_x(RE_2O_3)_y(SiO_2)_z(TiO_2)_u$ gebildet ist, wobei RE Lanthan, ein anderes Lanthanoid oder Yttrium ist, wobei bis zu 10 % von Ba durch Sr, Ca, Mg ersetzt sein können, und wobei bis zu 10 % Ti durch Zr, Hf, Y, Nb, V, Ta ersetzt sein können.

8. Dielektrikum mit einem dielektrischen Verlust von höchstens $10^{-2}$ im Hochfrequenzbereich, bestehend aus einer Glaskeramik nach einem der vorherigen Ansprüche, hergestellt mit den folgenden Schritten:

 - Erschmelzen eines Ausgangsglases, das die Bestandteile (in Mol-% auf Oxidbasis) enthält

| | |
|---|---|
| $SiO_2$ | 1 - 50 |
| $Al_2O_3$ | 0 - 20 |
| $B_2O_3$ | 0 - 25 |
| $TiO_2$ | >41 - 70 |
| $RE_2O_3$ | 15 - 30 |
| BaO | 0 - 35 |

 wobei RE Lanthan, ein anderes Lanthanoid oder Yttrium ist, wobei Ti teilweisedurch Zr, Hf, Y, Nb, V, Ta ersetzt sein kann, wobei ein obligatorischer Mindestgehalt von größer als 41 Mol-% nicht unterschritten werden darf, und wobei 15 bis 30 Mol-% $La_2O_3$ und/oder $Nd_2O_3$ enthalten sind;
 - Homogenisieren derart, dass die Porosität < 0,01 % ist;
 - Gießen des Ausgangsglases in eine gewünschte Form;
 - Abkühlen des Ausgangsglases auf Raumtemperatur;
 - Keramisieren des Ausgangsglases durch eine Wärmebehandlung bei einer derartigen Temperatur und einer derartigen Zeit, dass der Betrag der Temperaturabhängigkeit der Resonanzfrequenz $|\tau_f|$ höchstens 200 ppm/K, vorzugsweise höchstens 100 ppm/K, weiter bevorzugt höchstens 60 ppm/K, weiter bevorzugt höchstens 20 ppm/K, besonders bevorzugt höchstens 10 ppm/K beträgt.

9. Dielektrikum nach Anspruch 8, das durch eine Wärmebehandlung keramisiert ist, bei der auf eine Zieltemperatur von 900 °C bis 1050 °C, insbesondere von 900 °C bis 1000 °C, insbesondere von 930 °C bis 1000 °C, insbesondere von 930 °C bis 980 °C, aufgeheizt wird und über eine Zeitdauer von 1 bis mindestens 30 Stunden, insbesondere von 1 bis 10 Stunden insbesondere von 3 bis mindestens 5 Stunden, vorzugsweise bis zu maximal etwa 25 Stunden, gehalten wird und anschließend auf Raumtemperatur abgekühlt wird.

**Claims**

1. A glass-ceramic comprising at least the following constituents (in mol% on oxide basis):

| | |
|---|---|
| $SiO_2$ | 1 - 50 |
| $Al_2O_3$ | 0 - 20 |
| $B_2O_3$ | 0 - 25 |
| $TiO_2$ | > 41 - 70 |
| $RE_2O_3$ | 15 - 30 |
| BaO | 0 - 35 |

 wherein RE is lanthanum, another lanthanoid, or yttrium, and wherein Ti may be replaced in part by Zr, Hf, Y, Nb, V, Ta, wherein an obligatory minimum Ti content must not remain under more than 41 mol%, and wherein the porosity is < 0.01%, and wherein 15 to 30 mol% of $La_2O_3$ and/or $Nd_2O_3$ are included.

2. The glass-ceramic of claim 1, wherein the fraction of $B_2O_3$ is < 9 mol%, preferably ≤ 8 mol%.

3. The glass-ceramic of any of the preceding claims, having a dielectric loss (tan $\delta$) of not more than $10^{-2}$, preferably of not more than $10^{-3}$, in the high-frequency range (frequency f > 200 MHz).

4. The glass-ceramic of any of the preceding claims, having a relative permittivity $\varepsilon$ of at least 15, preferably > 18, preferably in the range from 20 to 80.

5. The glass-ceramic of any of the preceding claims, wherein the absolute value of the temperature dependence of the resonance frequency $|\tau_f|$ is not more than 200 ppm/K, preferably not more than 50 ppm/K, more preferably not more than 10 ppm/K.

6. The glass-ceramic of any of the preceding claims, comprising at least one solid-solution phase based on RE, Ti, Si, O, and optionally Ba, where Ba may be replaced at least in part by Sr, Ca, Mg, where RE is a lanthanoid or yttrium, and wherein Ti may be replaced at least in part by Zr, Hf, Y, Nb, V, Ta.

7. The glass-ceramic of any of the preceding claims, comprising at least one solid-solution phase selected from the group formed by $(BaO)_x(RE_2O_3)_y(SiO_2)_z(TiO_2)_u$, where RE is lanthanum, another lanthanoid, or yttrium, wherein up to 10% of Ba may be replaced by Sr, Ca, Mg, and wherein up to 10% of Ti may be replaced by Zr, Hf, Y, Nb, V, Ta.

8. A dielectric having a dielectric loss of not more than $10^{-2}$ in the high-frequency range, consisting of a glass-ceramic of any of the preceding claims, produced by the following steps:

   - melting a starting glass comprising the following constituents (in mol% on oxide basis):

   | | |
   |---|---|
   | $SiO_2$ | 1 - 50 |
   | $Al_2O_3$ | 0 - 20 |
   | $B_2O_3$ | 0 - 25 |
   | $TiO_2$ | >41 - 70 |
   | $RE_2O_3$ | 0 - 35 |
   | BaO | 0 - 35 |

   wherein RE is lanthanum, another lanthanoid, or yttrium, and wherein Ti may be replaced in part by Zr, Hf, Y, Nb, V, Ta, wherein an obligatory minimum Ti content must not remain under more than 41 mol%, and wherein the porosity is < 0.01%, and wherein 15 to 30 mol% of $La_2O_3$ and/or $Nd_2O_3$ are included;
   - homogenizing such that the porosity is < 0.01%;
   - pouring the starting glass into a desired shape;
   - cooling the starting glass to room temperature;
   - ceramizing the starting glass by a heat treatment at a temperature and for a time such that the absolute amount of the temperature dependence of the resonance frequency $|\tau_f|$ is not more than 200 ppm/K, preferably not more than 100 ppm/K, more preferably not more than 60 ppm/K, more preferably not more than 20 ppm/K, very preferably not more than 10 ppm/K.

9. The dielectric of claim 8, ceramicized by a heat treatment in which heating takes place to a target temperature of 900°C to 1050°C, more particularly of 900°C to 1000°C, more particularly of 930°C to 1000°C, more particularly of 930°C to 980°C, and is maintained over a duration of 1 to at least 3 hours, more particularly of 1 to 10 hours, more particularly of 3 to at least 5 hours, preferably up to a maximum of about 25 hours, followed by cooling to room temperature.

**Revendications**

1. Céramique de verre, qui présente au moins les ingrédients suivants (en % en moles sur la base d'oxydes) :

   | | |
   |---|---|
   | $SiO_2$ | 1 à 50 |
   | $Al_2O_3$ | 0 à 20 |

(suite)

| | |
|---|---|
| B₂O₃ | 0 à 25 |
| TiO₂ | > 41 à 70 |
| RE₂O₃ | 15 à 30 |
| BaO | 0 à 35 |

RE étant le lanthane, un autre lanthanide ou l'yttrium, Ti pouvant être partiellement remplacé par Zr, Hf, Y, Nb, V, Ta, une teneur minimale obligatoire en dessous de laquelle on ne doit pas descendre étant supérieure à 41 % en moles, et la porosité étant < 0,01 %, et
15 à 30 % en moles de $La_2O_3$ et/ou de $Nd_2O_3$ étant contenus.

2. Céramique de verre selon la revendication 1, dans laquelle la proportion de $B_2O_3$ est < 9 % en moles, de préférence ≤ 8 % en moles.

3. Céramique de verre selon l'une quelconque des revendications précédentes, qui présente une perte diélectrique (tan δ) d'au plus $10^{-2}$, de préférence d'au plus $10^{-3}$, dans le domaine des hautes fréquences (fréquence f > 200 MHz).

4. Céramique de verre selon l'une quelconque des revendications précédentes, dotée d'une permissivité relative ε d'au moins 15, de préférence > 18, de préférence dans la plage de 20 à 80.

5. Céramique de verre selon l'une quelconque des revendications précédentes, dans laquelle la valeur de la dépendance à la température de la fréquence de résonance $|\tau_f|$ est d'au plus 200 ppm/K, de préférence d'au plus 50 ppm/K, particulièrement préférablement d'au plus 10 ppm/K.

6. Céramique de verre selon l'une quelconque des revendications précédentes, qui contient au moins une phase cristalline mixte à base de RE, Ti, Si, O et, selon le cas, Ba, Ba pouvant être au moins partiellement remplacé par Sr, Ca, Mg, RE étant un lanthanide ou l'yttrium et Ti pouvant être partiellement remplacé par Zr, Hf, Y, Nb, V, Ta.

7. Céramique de verre selon l'une quelconque des revendications précédentes, qui contient au moins une phase cristalline mixte, qui est choisie dans le groupe formé par $(BaO)_x(RE_2O_3)_y(SiO_2)_z(TiO_2)_u$, RE étant le lanthane, un autre lanthanide ou l'yttrium, jusqu'à 10 % de Ba pouvant être remplacés par Sr, Ca, Mg, et jusqu'à 10 % de Ti pouvant être remplacés par Zr, Hf, Y, Nb, V, Ta.

8. Diélectrique doté d'une perte diélectrique d'au plus $10^{-2}$ dans le domaine des hautes fréquences, constitué d'une céramique de verre selon l'une quelconque des revendications précédentes, préparé avec les étapes suivantes :

- fusion d'un verre de départ, qui contient les ingrédients (en % en moles sur la base d'oxydes)

| | |
|---|---|
| SiO₂ | 1 à 50 |
| Al₂O₃ | 0 à 20 |
| B₂O₃ | 0 à 25 |
| TiO₂ | > 41 à 70 |
| RE₂O₃ | 15 à 30 |
| BaO | 0 à 35 |

RE étant le lanthane, un autre lanthanide ou l'yttrium, Ti pouvant être partiellement remplacé par Zr, Hf, Y, Nb, V, Ta, une teneur minimale obligatoire en dessous de laquelle on ne doit pas descendre étant supérieure à 41 % en moles,
et 15 à 30 % en moles de $La_2O_3$ et/ou de $Nd_2O_3$ étant contenus ;

- homogénéisation de telle manière que la porosité est < 0,01 % ;
- versement du verre de départ dans un moule souhaité ;
- refroidissement du verre de départ à température ambiante ;
- céramisation du verre de départ par un traitement thermique à une température telle et pendant une durée telle, que la valeur de la dépendance à la température de la fréquence de résonance $|\tau_f|$ est d'au plus 200 ppm/K, de préférence d'au plus 100 ppm/K, plus préférablement d'au plus 60 ppm/K, plus préférablement d'au plus de 20 ppm/K, particulièrement préférablement d'au plus 10 ppm/K.

9. Diélectrique selon la revendication 8, qui est céramisé par un traitement thermique, dans lequel on chauffe à une température cible de 900 °C à 1050 °C, en particulier de 900 °C à 1000 °C, en particulier de 930 °C à 1000 °C, en particulier de 930 °C à 980 °C et on la maintient sur une période de temps de 1 à au moins 30 heure(s), en particulier de 1 à 10 heure(s), en particulier de 3 à au moins 5 heures, de préférence jusqu'à maximum environ 25 heures, et on refroidit ensuite à température ambiante.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6184845 B1
- US 2007063902 A1
- US 20020037804 A1
- US 20040009863 A1
- JP 2006124201 A
- JP 2011195440 A
- DE 102010012524
- CN 1113882 C

**In der Beschreibung aufgeführte Nicht-Patentliteratur**

- **MIRSANEH et al.** Circularly Loaded Dielectric-Loaded Antennas: Current Technology and Future Challanges. *Adv. Funct. Materials,* 2008, vol. 18, 1-8
- **M.T. SEBASTIAN et al.** Low loss dielectric materials for LTCC applications. *International Materials Reviews,* 2008, vol. 53, 57-90